# EUROPÄISCHE PATENTANMELDUNG

(11) **EP 1 468 658 A1**
(43) Veröffentlichungstag der Anmeldung: **20.10.2004**
(21) Anmeldenummer: 04008858.5
(22) Anmeldetag: 14.04.2004
(51) Int. Cl.: A61C 8/00

(54) **Interimsimplantat**

(30) Priorität: 14.04.2003 DE 20306008 U
(71) Anmelder: Lintner, Andreas, Dr., 47877 Willich (DE); Schneider, Martin, Dr., 51149 Köln (DE)
(72) Erfinder: Lintner, Andreas, Dr., 47877 Willich (DE); Schneider, Martin, Dr., 51149 Köln (DE)
(74) Vertreter: DR. STARK & PARTNER

(57) **Zusammenfassung**

Die Erfindung betrifft ein provisorisches Interimsimplantat zum Halten eines provisorischen Zahnersatzes, mit einem unterseitigen, in den Kieferknochen eines Patienten einsetzbaren Befestigungsbereich und mit einem oberseitigen Haltebereich für die Anbringung des provisorischen Zahnersatzes. Um ein Interimsimplantat der Eingangs genannten Art anzugeben, mit dem die Befestigung eines provisorischen Zahnersatzes unabhängig von der Anprobe des endgültigen Zahnersatzes möglich ist, soll der Haltebereich und der Befestigungsbereich als separate und mittels zumindest eines geeigneten Befestigungsmittels miteinander lösbar verbindbare Bestandteile ausgebildet sein, wobei der bei demontiertem und entferntem Haltebereich im Mundraum des Patienten verbleibende Befestigungsbereich derart ausgebildet ist, dass ein Anpassen des endgültigen Zahnersatzes problemlos möglich ist.

## Beschreibung

Die Erfindung betrifft ein provisorisches Interimsimplantat zum Halten eines provisorischen Zahnersatzes, mit einem unterseitigen, in den Kieferknochen eines Patienten einsetzbaren Befestigungsbereich und mit einem oberseitigen Haltebereich für die Anbringung des provisorischen Zahnersatzes.

Aus der Praxis sind verschiedenste Implantatsysteme bekannt, die jedoch nicht als Interimsimplantat zum Halten eines provisorischen Zahnersatzes, sondern für den endgültigen Verbleib im Kieferknochen konzipiert sind.

Die vorbekannten Interimsimplantate weisen einen einteiligen Aufbau mit einstückig ausgebildetem Befestigungs- und Haltebereich auf. Obwohl eine Anprobe des endgültigen Zahnersatzes zwecks Überprüfung des spannungsfreien Sitzes des Zahnersatzes bzw. eine Gerüstanprobe der zahnersetzenden Implantatarbeit sehr empfehlenswert ist, erfolgt eine solche Anprobe zur Zeit regelmäßig nicht, da diese bei eingesetztem Interimsimplantat nicht möglich ist und ein Entfernen des Interimsimplantates zur Folge hätte, dass der Patient bis zum endgültigen Einsatz des Zahnersatzes in dieser Region zahnlos wäre, was jedoch eine nicht hinnehmbare Beeinträchtigung des Patienten darstellen würde.

Aufgabe der Erfindung ist es, diesen Nachteil zu vermeiden und ein Interimsimplantat der Eingangs genannten Art anzugeben, mit dem die Befestigung eines provisorischen Zahnersatzes unabhängig von der Anprobe des endgültigen Zahnersatzes möglich ist.

Diese Aufgabe wird gelöst durch ein provisorisches Interimsimplantat zum Halten eines provisorischen Zahnersatzes, mit einem unterseitigen, in den Kieferknochen eines Patienten einsetzbaren Befestigungsbereich und mit einem oberseitigen Haltebereich für die Anbringung des provisorischen Zahnersatzes, wobei der Haltebereich und der Befestigungsbereich als separate und mittels zumindest eines geeigneten Befestigungsmittels miteinander lösbar verbindbare Bestandteile ausgebildet sind, wobei der bei demontiertem und entferntem Haltebereich im Mundraum des Patienten verbleibende Befestigungsbereich derart ausgebildet ist, dass ein Anpassen des endgültigen Zahnersatzes problemlos möglich ist.

Hierdurch kann zur Anprobe der Krone sowohl der provisorische Zahnersatz als auch der Haltebereich des Interimsimplantates entfernt werden, so dass ein einwandfreies Anpassen des endgültigen Zahnersatzes erfolgen kann. Für die Zeit der Erstellung der Krone kann dann der Haltebereich des Interimsimplantates und auch der provisorische Zahnersatz wieder angebracht werden, da der Befestigungsbereich während der Anprobe der Krone im Kieferknochen verblieben ist.

Vorzugsweise kann als Befestigungsmittel eine von dem Haltebereich durchfasste und zumindest einen vorspringenden Bereich des Haltebereichs hintergreifende Überwurfmutter oder dergleichen vorgesehen sein, die mittels einer geeigneten Ausbildung an einer entsprechenden Ausgestaltung des Befestigungsbereichs anbringbar ist, wobei der Befestigungsbereich und der Haltebereich mit aufeinander abgestimmten und im montierten Zustand aneinander anliegenden Kontaktbereichen versehen sind, so dass mit einfachen technischen Mitteln eine einerseits sichere und andererseits einfach zu befestigende Montage bzw. eine leicht zu lösende Demontage des Haltebereichs möglich ist.

Hierzu kann auch als Befestigungsmittel eine den Haltebereich durchfassende und zumindest einen Bereich des Haltebereichs hintergreifende Durchsteckschraube oder dergleichen vorgesehen sein, die mittels einer geeigneten Ausbildung an einer entsprechenden Ausgestaltung des Befestigungsbereichs anbringbar ist, wobei der Befestigungsbereich und der Haltebereich mit aufeinander abgestimmten und im montierten Zustand aneinander anliegenden Kontaktbereichen versehen sind.

Erfindungsgemäß können die Kontaktbereiche hierbei jeweils als eine ebenmäßige Fläche ausgebildet sein, so dass ein vollflächiges Anliegen der Kontaktbereiche eine genaue und dauerhaft konstante Einschubtiefe gewährleistet und eine einfache Fertigung sowie eine leichte Reinigung möglich sind.

Vorteilhafterweise können die Ausbildung der Überwurfmutter bzw. der Durchsteckschraube und die Ausgestaltung des Befestigungsbereiches als jeweilige Teile einer Schrauboder Bajonettverbindung vorgesehen sein, so dass eine leicht herzustellende bzw. wieder zu lösende, dauerhaft feste und belastbare Verbindung von Haltebereich und Befestigungsbereich gegeben ist.

Auch können der Haltebereich und der Befestigungsbereich eine derartige Ausgestaltung aufweisen, dass lediglich eine einzige relative Ausrichtung von Haltebereich und Befestigungsbereich zueinander möglich ist. Hierdurch ist gewährleistet, dass der Haltebereich nach Anpassung der Krone zur erneuten Anbringung des provisorischen Zahnersatzes in genau derselben Position wieder montiert wird, in der der provisorische Zahnersatz angepasst wurde. Beschwerden durch Veränderungen der Zahnersatzausrichtung oder ein erneutes Anpassen werden so von vorne herein vermieden. Insofern kann der Haltebereich einerseits rotationsgesichert und andererseits in einer eindeutig vorbestimmten Position fixiert werden.

Bei einem bevorzugten Ausführungsbeispiel kann hierzu die Ausgestaltung von Haltebereich und Befestigungsbereich als eine unregelmäßige und eine eindeutige Ausrichtung zwingend gewährleistende Kontur, wie z. B. eine ungleichmäßige Ellipse oder dergleichen, ausgebildet sein, so dass durch die Ausgestaltung der Außenkontur, insbesondere bei gleicher Kontur über die gesamte Höhe der in Kontakt stehenden Teilbereiche von Haltebereich und Befestigungsbereich, neben der zwingend gewährleisteten richtigen Positionierung und Ausrichtung des Haltebereiches auch eine einfache und genaue Herstellung sowie eine gute Reinigung der entsprechenden Bereiche möglich ist.

Dabei kann die unregelmäßige und eine eindeutige Ausrichtung zwingend gewährleistende Kontur als ein vorspringender und mit einer korrespondierenden Aussparung entsprechend zusammenwirkender Bereich ausgebildet sein. Vorzugsweise kann der vorspringende Bereich an dem Haltebereich 4 und die korrespondierende Aussparung an dem Befestigungsbereich 1 angeordnet sein; es ist aber auch die umgekehrte Anordnung möglich.

Vorteilhafterweise kann der Befestigungsbereich und/oder der Haltebereich mit einer Biegezone versehen sein, so dass bei bereits im Kieferknochen des Patienten befestigten Befestigungsbereich eine aufgrund der spezifischen Gegebenheiten bedingte unvorteilhafte Ausrichtung des Befestigungsbereiches kompensiert werden kann.

Im Folgenden wird ein in der Zeichnung dargestelltes Ausführungsbeispiel der Erfindung erläutert. Es zeigen:
- Fig. 1: eine Seitenansicht des Befestigungsbereiches eines ersten Ausführungsbeispieles eines erfindungsgemäßen Interimsimplantates,
- Fig. 2: eine Seitenansicht des Gegenstandes nach Fig. 1 mit eingesetztem Haltebereich,
- Fig. 3: eine Seitenansicht des Gegenstandes nach Fig. 2 mit daran angebrachter Überwurfmutter,

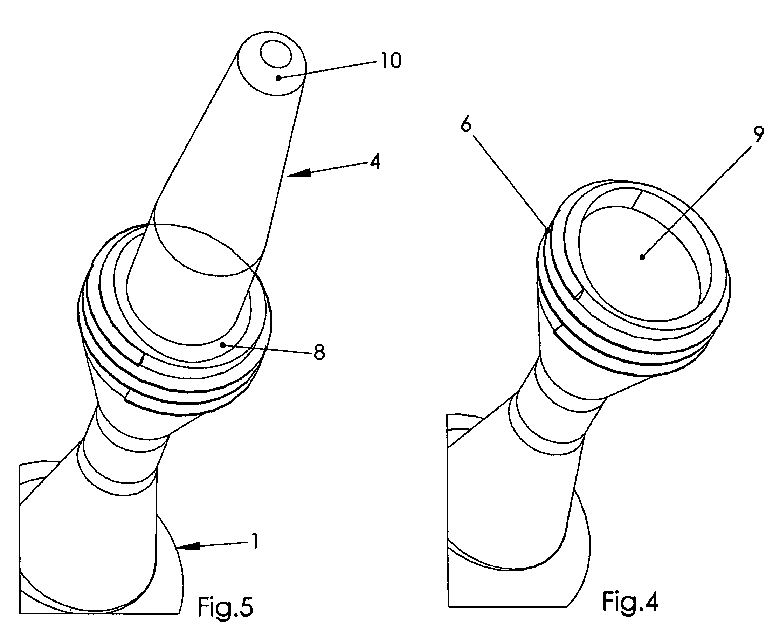

- Fig. 4: eine perspektivische Detailansicht schräg von vorne oben des Gegenstandes nach Fig. 1,
- Fig. 5: eine perspektivische Detailansicht schräg von vorne oben des Gegenstandes nach Fig. 2,
- Fig. 6: eine perspektivische Detailansicht eines zweiten Ausführungsbeispieles schräg von vorne oben,
- Fig. 7: eine perspektivische Explosionsdarstellung schräg von der Seite des Gegenstandes nach Fig. 6,
- Fig. 8: eine perspektivische Detailansicht des Befestigungsbereiches eines dritten Ausführungsbeispieles eines erfindungsgemäßen Interimsimplantates,
- Fig. 9: eine perspektivische Ansicht des Haltebereiches eines dritten Ausführungsbeispieles eines erfindungsgemäßen Interimsimplantates,
- Fig. 10: eine perspektivische Detailansicht des Befestigungsbereiches eines vierten Ausführungsbeispieles eines erfindungsgemäßen Interimsimplantates,
- Fig. 11: eine perspektivische Ansicht des Haltebereiches eines vierten Ausführungsbeispieles eines erfindungsgemäßen Interimsimplantates,
- Fig. 12: eine perspektivische Detailansicht des Befestigungsbereiches eines fünften Ausführungsbeispieles eines erfindungsgemäßen Interimsimplantates,
- Fig. 13: eine perspektivische Ansicht des Haltebereiches eines fünften Ausführungsbeispieles eines erfindungsgemäßen Interimsimplantates,

In allen Figuren werden für gleiche bzw. gleichartige Bauteile übereinstimmende Bezugszeichen verwendet.

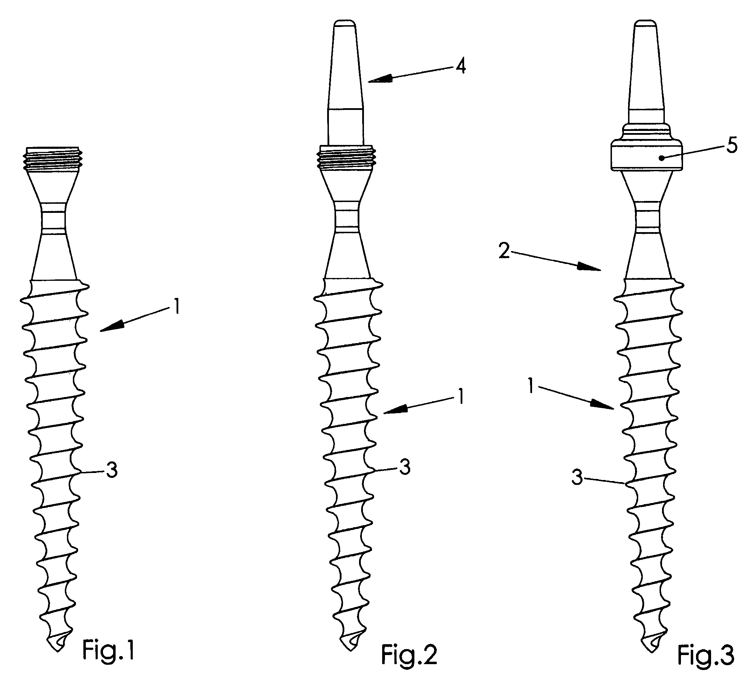

Figuren 1 bis 3 zeigen den Befestigungsbereich 1 eines provisorischen Interimsimplantates 2. Der Befestigungsbereich 1 weist dabei zum Einsetzen und Befestigen im Kieferknochen eines Patienten in seinem unteren Bereich eine umlaufende Gewindestruktur 3 auf. Oberseitig ist zur lösbaren Anbringung des Haltebereichs 4 mittels einer Überwurfmutter 5 ein Außengewinde 6 vorgesehen, das mit einem entsprechenden Innengewinde 7 der Überwurfmutter 5 zusammenwirken kann.

Hierzu wird, wie aus den Figuren 2 und 5 ersichtlich, der Haltebereich 4 mit einem vorspringenden Bereich 8, der vorliegend die Form einer unregelmäßigen Ellipse aufweist, in eine entsprechend ausgebildete Vertiefung 9 eingeführt und die Überwurfmutter 5 wird dann über den für die Anbringung eines in der Zeichnung nicht dargestellten provisorischen Zahnersatzes vorgesehener Teilbereich 10 herübergeführt und an dem Außengewinde 6 befestigt.

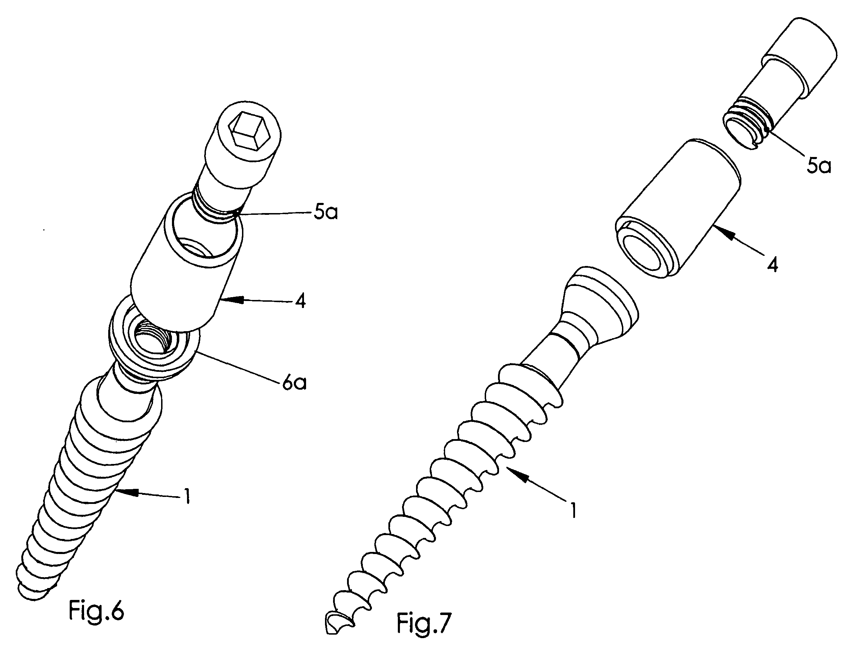

Die Figuren 6 und 7 zeigen ein weiteres Ausführungsbeispiel, bei dem statt einer Überwurfmutter 5 das Befestigungsmittel als Durchsteckschraube 5a ausgebildet ist und der Befestigungsbereich 1 ein entsprechendes Innengewinde 6a aufweist.

Unabhängig von der Ausgestaltung des Befestigungsmittels kann der Befestigungsbereich 1 und/oder der Haltebereich 4 mit einer Biegezone versehen sein, so dass bei bereits im Kieferknochen des Patienten befestigten Befestigungsbereich 1 eine aufgrund der spezifischen Gegebenheiten bedingte unvorteilhafte Ausrichtung des Befestigungsbereiches 1 kompensiert werden kann.

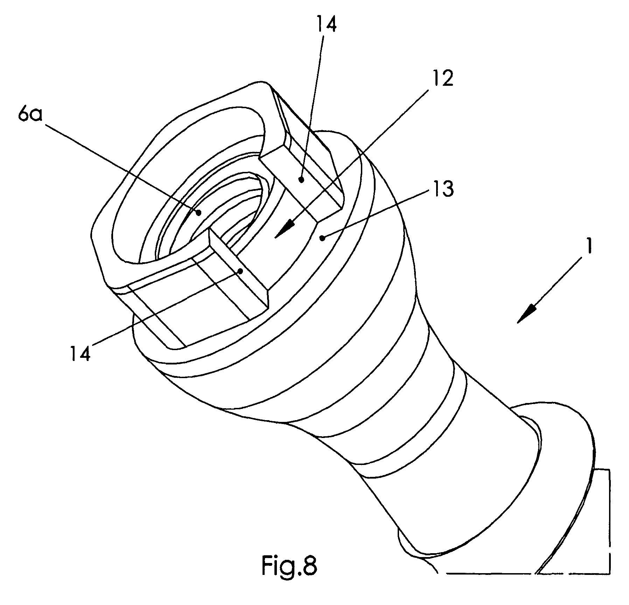

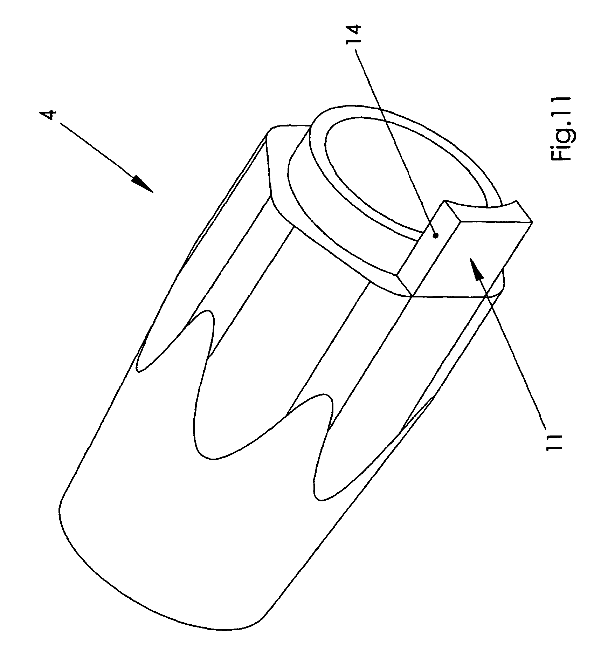

Auch die Figuren 8 bis 13 zeigen weitere Ausführungsbeispiele, bei denen statt einer Überwurfmutter 5 das in der Zeichnung nicht dargestellte Befestigungsmittel als Durchsteckschraube 5a ausgebildet ist und der Befestigungsbereich 1 ein entsprechendes Innengewinde 6a aufweist.

Um eine eindeutige Ausrichtung von Befestigungsbereich 1 und Haltebereich 4 zwingend zu gewährleisten, ist die Kontur ist die Ausgestaltung von Haltebereich 4 und Befestigungsbereich 1 entsprechend unregelmäßig ausgebildet.

Insoweit weist in den dargestellten Ausführungsbeispielen der Haltebereich 4 einen vorspringenden Bereich 11 auf, der mit einer korrespondierenden Aussparung 12 in der oberen Fläche 13 des Befestigungsbereichs 1 entsprechend zusammenwirkt.

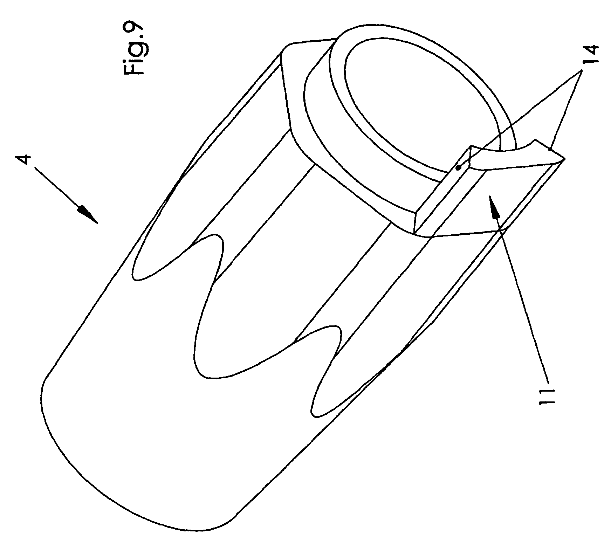

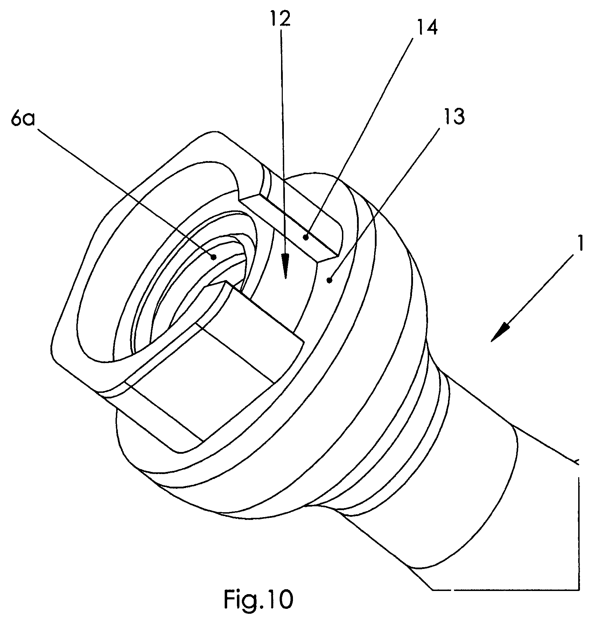

Dabei können der vorspringende Bereich 11 und die korrespondierende Aussparung 12 einwärts weisend angestellte Flanken 14 aufweisen (Fig. 8 und 9), die Flanken 14 können aber auch jeweils parallel und orthogonal zur Tangente auf dem Radius ausgebildet sein (Fig. 10 und 11 sowie 12 und 13).

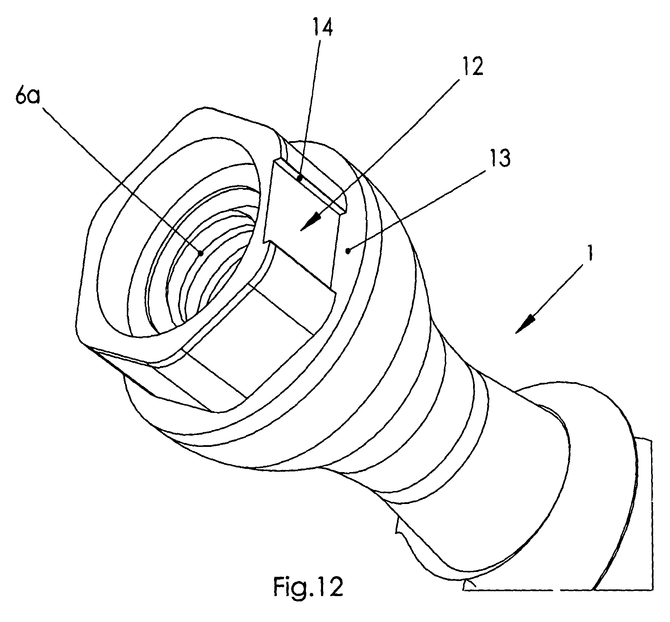

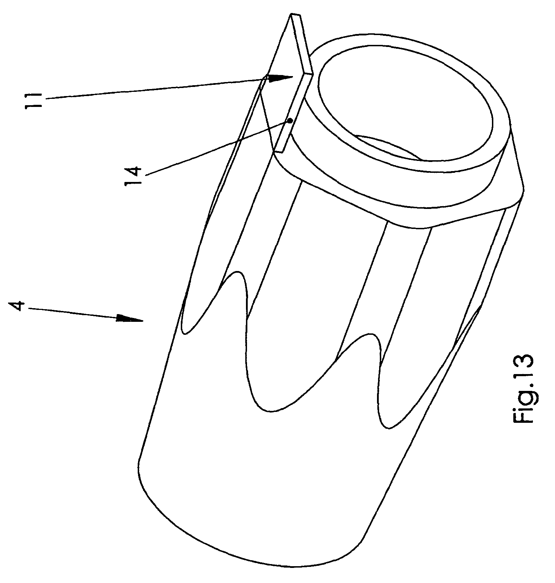

Unabhängig von der Ausrichtung der Flanken 14 können der vorspringende Bereich 11 und die korrespondierende Aussparung 12 kann die sich radiale Ausdehnung der Aussparung 12 nur über einen Teilbereich der Wandstärke des Befestigungsbereichs 1 erstrecken (Fig. 12 und 13), sie kann aber auch als durchgehende Unterbrechung in der Wandung des Befestigungsbereichs 1 ausgebildet sein. Gleiches gilt entsprechend für den vorspringenden Bereich 11 am Haltebereich 4 der in den Fig. 8 bis 13 dargestellten Ausführungsbeispiele.

Weiterhin kann die Anordnung von vorspringendem Bereich 11 und die korrespondierender Aussparung 12 auch entsprechend umgekehrt sein, d. h. der vorspringende Bereich 11 kann an dem Befestigungsbereich 1 und die korrespondierende Aussparung 12 kann an dem Haltebereich 4 vorgesehen sein.

## Patentansprüche

1. Provisorisches Interimsimplantat (2) zum Halten eines provisorischen Zahnersatzes, mit einem unterseitigen, in den Kieferknochen eines Patienten einsetzbaren Befestigungsbereich (1) und mit einem oberseitigen Haltebereich (4) für die Anbringung des provisorischen Zahnersatzes, **dadurch gekennzeichnet, dass** der Haltebereich (4) und der Befestigungsbereich (1) als separate und mittels zumindest eines geeigneten Befestigungsmittels miteinander lösbar verbindbare Bestandteile ausgebildet sind, wobei der bei demontiertem und entferntem Haltebereich (4) im Mundraum des Patienten verbleibende Befestigungsbereich (1) derart ausgebildet ist, dass ein Anpassen des endgültigen Zahnersatzes problemlos möglich ist.

2. Interimsimplantat (2) nach Anspruch 1, **dadurch gekennzeichnet, dass** als Befestigungsmittel eine von dem Haltebereich (4) durchfasste und zumindest einen vorspringenden Bereich (8) des Haltebereichs (4) hintergreifende Überwurfmutter (5) oder dergleichen vorgesehen ist, die mittels einer geeigneten Ausbildung an einer entsprechenden Ausgestaltung des Befestigungsbereichs (1) anbringbar ist, wobei der Befestigungsbereich (1) und der Haltebereich (4) mit aufeinander abgestimmten und im montierten Zustand aneinander anliegenden Kontaktbereichen versehen sind.

3. Interimsimplantat (2) nach Anspruch 1, **dadurch gekennzeichnet, dass** als Befestigungsmittel eine den Haltebereich (4) durchfassende und zumindest einen Bereich (8) des Haltebereichs (4) hintergreifende Durchsteckschraube (5a) oder dergleichen vorgesehen ist, die mittels einer geeigneten Ausbildung an einer entsprechenden Ausgestaltung des Befestigungsbereichs (1) anbringbar ist, wobei der Befestigungsbereich (1) und der Haltebereich (4) mit aufeinander abgestimmten und im montierten Zustand aneinander anliegenden Kontaktbereichen versehen sind.

4. Interimsimplantat (2) nach Anspruch 2 oder 3, **dadurch gekennzeichnet, dass die** Kontaktbereiche jeweils als eine ebenmäßige Fläche ausgebildet sind.

5. Interimsimplantat (2) nach einem der Ansprüche 2 bis 4, **dadurch gekennzeichnet, dass** die Ausbildung der Überwurfmutter (5) bzw. der Durchsteckschraube (5a) und die Ausgestaltung des Befestigungsbereiches (1) als jeweilige Teile einer Schraub- oder Bajonettverbindung vorgesehen sind.

6. Interimsimplantat (2) nach einem der Ansprüche 1 bis 5, **dadurch gekennzeichnet, dass** der Haltebereich (4) und der Befestigungsbereich (1) eine derartige Ausgestaltung aufweisen, dass lediglich eine einzige relative Ausrichtung von Haltebereich (4) und Befestigungsbereich (1) zueinander möglich ist.

7. Interimsimplantat (2) nach Anspruch 6, **dadurch gekennzeichnet, dass** die Ausgestaltung von Haltebereich (4) und Befestigungsbereich (1) als eine unregelmäßige und eine eindeutige Ausrichtung zwingend gewährleistende Kontur, wie z. B. eine ungleichmäßige Ellipse oder dergleichen, ausgebildet ist.

8. Interimsimplantat (2) nach einem der Ansprüche 1 bis 7, **dadurch gekennzeichnet, dass** der Befestigungsbereich (1) und/oder der Haltebereich (4) mit einer Biegezone versehen sind.

9. Interimsimplantat (2) nach Anspruch 7 oder Anspruch 8, soweit auf Anspruch 7 rückbezogen, **dadurch gekennzeichnet, dass** die unregelmäßige und eine eindeutige Ausrichtung zwingend gewährleistende Kontur als ein vorspringender und mit einer korrespondierenden Aussparung entsprechend zusammenwirkender Bereich ausgebildet ist.
